# EUROPÄISCHE PATENTSCHRIFT

(11) **EP 4 280 552 B1**
(45) Veröffentlichungstag und Bekanntmachung des Hinweises auf die Patenterteilung: **11.03.2026**
(21) Anmeldenummer: 23173742.0
(22) Anmeldetag: 16.05.2023
(51) Int. Cl.: H04L 12/46, H04L 12/40

(54) **PRIMÄRES KOMMUNIKATIONSGERÄT, ANKOPPLUNGSMODUL UND KOMMUNIKATIONSSYSTEM**
PRIMARY COMMUNICATION DEVICE, COUPLING MODULE AND COMMUNICATION SYSTEM
DISPOSITIF DE COMMUNICATION PRIMAIRE, MODULE DE COUPLAGE ET SYSTÈME DE COMMUNICATION

(30) Priorität: 17.05.2022 LU 502098
(43) Veröffentlichungstag der Anmeldung: 22.11.2023
(73) Patentinhaber: PHOENIX CONTACT GMBH & CO. KG, 32825 Blomberg (DE)
(72) Erfinder: KOGELHEIDE, Martin, 58456 Witten (DE)
(74) Vertreter: Blumbach · Zinngrebe Patentanwälte PartG mbB

(56) Entgegenhaltungen:
- EP-A1- 3 393 061
- WO-A1-2020/232494
- US-A- 5 068 847

## Beschreibung

Die Erfindung betrifft ein primäres Kommunikationsgerät, insbesondere einen Kommunikationsmaster, ein Ankopplungsmodul für ein sekundäres Kommunikationsgerät, insbesondere ein Kommunikationsslave, sowie ein Kommunikationssystem, das ein primäres Kommunikationsgerät, mehrere Ankopplungsmodule und mehrere sekundäres Kommunikationsgeräte aufweist.

Zur Übertragung von Daten zwischen einem Zentralgerät und unterlagerten Geräten kann ein Datenbus in Form einer Kupferleitung verwendet werden, an die das Zentralgerät und die unterlagerten Geräte angeschlossen werden können. Die Datenübertragung kann beispielsweise durch ein Kommunikationsprotokoll nach dem Standard IEC 60870-5-103 oder IEC 60870-5-101 gesteuert werden. Hierbei sendet das Zentralgerät, welches als Kommunikationsmaster ausgebildet sein kann, ein Telekommunikationstelegramm an alle unterlagerten Geräte, wobei nur das adressierte unterlagerte Gerät das empfangene Kommunikationstelegramm weiterverarbeiten kann. Wird als Kommunikationsnetz ein Glasfasernetz verwendet, so muss vom Zentralgerät zu jedem einzelnen unterlagerten Gerät eine Punkt-zu-Punkt-Verbindung implementiert werden. Hierfür kann ein Lichtwellenleiter-Sternkoppler eingesetzt werden, der ein Lichtsignal in mehrere Lichtwellenleiter gleichzeitig einkoppelt.

Derartige Lichtwellenleiter-Sternkoppler sind bekannt und beispielsweise im Internet, zu finden unter der URL https://de.wikipedia.org/wiki/sternkoppler, beschrieben. Derartige Sternkoppler sind als hardwarebasierte Netzwerkkomponenten ausgebildet und werden verwendet, um zum Beispiel ein Kommunikationstelegramm in Form von Lichtsignalen in mehrere Lichtwellenleiter gleichzeitig einzukoppeln. Ein solcher Sternkoppler weist eine festgelegte Anzahl an Ports zum Anschließen von Glasfasern auf.

Aus der DE 41 06 726 B4 ist ein passiver NxN-Sternkoppler vom Reflexionstyp bekannt, der in einem Kommunikationsnetzwerk für Kraftfahrzeuge verwendet wird Aus der WO 2020/232494 A1 ist ebenso ein Datenkommunikationssystem bekannt, bei dem ein ähnlicher, hardwarebasierter Verteiler zum Einsatz kommt.

Der Erfindung liegt die Aufgabe zugrunde, ein primäres Kommunikationsgerät, ein Ankopplungsmodul und ein Kommunikationssystem zu schaffen, die in kostengünstiger Weise eine Kommunikation zwischen einem primären Kommunikationsgerät und mehreren sekundären Kommunikationsgeräten, die mittels Lichtwellenleitern an das Kommunikationssystem angeschlossen sind, zu ermöglichen, und zwar ohne einen hardwarebasierten und in der Anzahl an Ports festgelegten Lichtwellenleiter-Sternkoppler verwenden zu müssen. Gemäß einem vorteilhaften Aspekt kann hierdurch ein Kommunikationssystem kostengünstig und schnell skaliert werden.

Ein Kerngedanke der Erfindung kann darin gesehen werden, ein Kommunikationssystem zu schaffen, welches eine Kommunikation zwischen einem primären Kommunikationsgerät und mehreren sekundären Kommunikationsgeräten insbesondere nach einem Master/Slave-Betrieb ermöglicht, wobei die sekundären Kommunikationsgeräte jeweils über wenigstens einen Lichtwellenleiter an das Kommunikationssystem angebunden sind. Anstatt einen hardwarebasierten Sternkoppler einzusetzen, ist in dem primären Kommunikationsgerät eine softwarebasierte Sternkoppler-Funktionalität implementiert, die die Aufgaben eines als Hardwarebauteil ausgebildeten Sternkopplers übernimmt.

Das oben genannte technische Problem wird durch die Merkmale des Anspruchs 1 gelöst. Vorteilhafte Ausgestaltungen und Weiterbildungen sind Gegenstand der Ansprüche 2 bis 5.

Demnach ist ein primäres Kommunikationsgerät vorgesehen, welches folgende Merkmale aufweisen kann:
Eine Busschnittstelle, die zum Anschließen des primären Kommunikationsgeräts an einen Datenbus ausgebildet ist,
eine Speichereinrichtung, in der eine Software gespeichert ist, und
eine Steuereinheit, die dazu ausgebildet ist, unter Ausführung der Software das primäre Kommunikationsgerät zu veranlassen,
   - ein Kommunikationstelegramm für ein vorbestimmtes sekundäres Kommunikationsgerät bereitzustellen,
   - in das Kommunikationstelegramm eine erste Adresse, die dem vorbestimmten sekundären Kommunikationsgerät zugeordnet ist, einzufügen,
   - das Kommunikationstelegramm n-mal zu kopieren, wobei n größer als 1 ist,
   - in jedes der kopierten Kommunikationstelegramme, eine zweite Adresse einzufügen, wobei die zweiten Adressen unterschiedlich sind und jeweils einem separaten Ankopplungsmodul zugeordnet sind, und
   - jedes der kopierten Kommunikationstelegramme über die Busschnittstelle zu versenden.

Angemerkt sei, dass die erste Adresse eine Broadcast-Adresse oder eine dem vorbestimmten sekundären Kommunikationsgerät eindeutig zugeordnete Adresse sein kann. Mithilfe einer Broadcast-Adresse kann das primäre Kommunikationsgerät ein einziges Kommunikationstelegramm an alle sekundären Kommunikationsgeräte schicken, um beispielsweise die Uhrzeit zu synchronisieren.

Das primäre Kommunikationsgerä fungiert als ein Master-Kommunikationsgerät und die sekundären Kommunikationsgeräte als Slave-Kommunikationsgeräte.

Die in der Speichereinrichtung gespeicherte Software enthält ein erstes Programm, das ein Kommunikationsprotokoll welches einen Master/Slave-Betrieb unterstützt, implementiert, und ein zweites Programm, das eine Sternkoppler-Funktionalität implementiert. Unter einem Master/Slave-Betrieb ist insbesondere ein Aufrufbetrieb zu verstehen, bei dem das primäre Kommunikationsgerät gezielt sekundäre Kommunikationsgeräte auffordert, Daten, zum Beispiel aktuelle Messwerte, zum primären Kommunikationsgerät zu übertragen.

Das zweite, eine Sternkoppler-Funktionalität ausführende Programm, kennt im Unterschied zum Kommunikationsprotokoll die implementierte Kommunikationsinfrastruktur. Deshalb veranlasst das zweite Programm, wenn es von der Steuereinheit ausgeführt wird, das primäre Kommunikationsgerät das Kommunikationstelegramm n-mal zu kopieren, wobei n größer als 1 ist, in jedes der kopierten Kommunikationstelegramme, eine zweite Adresse einzufügen, wobei die zweiten Adressen unterschiedlich sind und jeweils einem separaten Ankopplungsmodul zugeordnet sind, und jedes der kopierten Kommunikationstelegramme über die Busschnittstelle zu versenden. Der Parameter n entspricht vorzugsweise der Anzahl an sekundären Kommunikationsgeräten, mit denen das primäre Kommunikationsgerät eine Kommunikationsgruppe bildet.

Das erste Programm kann vorzugsweise ein Kommunikationsprotokoll zur seriellen Datenübertragung implementieren. Vorzugsweise handelt es sich bei dem Kommunikationsprotokoll beispielsweise um ein Modbus-Protokoll, ein Kommunikationsprotokoll gemäß dem Standard IEC60870-5-103 oder gemäß dem Standard IEC60870-5-101. Die Busschnittstelle kann als serielle Busschnittstelle ausgebildet sein.

Vorzugsweise fungiert das primäre Kommunikationsgerät als ein Steuergerät. Es kann insbesondere zum Einsatz in der Fernwirk- oder Stationsleittechnik ausgebildet sein. Um die Flexibilität und Skalierbarkeit des primären Kommunikationsgerät zu erhöhen, kann eine weitere Busschnittstelle vorgesehen sein, die zum Anschließen des primären Kommunikationsgeräts an einen weiteren Datenbus ausgebildet ist. Die Steuereinheit kann vorzugsweise dazu ausgebildet sein, unter Ausführung der im primären Kommunikationsgerät gespeicherten Software das primäre Kommunikationsgerät zu veranlassen, jedes der kopierten Kommunikationstelegramme über die Busschnittstelle oder die weitere Busschnittstelle zu versenden. Vorzugsweise kann hierzu in jedes kopierte Kommunikationstelegramm eine Kennung der Busschnittstelle oder der weiteren Busschnittstelle eingefügt werden.

Um eine flexible Datenübertragung, die vorzugsweise von der Übertragungsgeschwindigkeit entkoppelt ist, zu ermöglichen, kann die Steuereinheit des primären Kommunikationsgeräts dazu ausgebildet sein, unter Ausführung der Software das primäre Kommunikationsgerät zu veranlassen, zumindest einige der kopierten Kommunikationstelegramme zu segmentieren und die Segmente jedes segmentierten Kommunikationstelegramms einzeln über die Busschnittstelle zu versenden.

Das oben genannte technische Problem wird ferner durch die Merkmale des Anspruchs 6 gelöst. Vorteilhafte Ausgestaltungen und Weiterbildungen sind Gegenstand der Ansprüche 7 bis 10.

Demnach ist ein Ankopplungsmodul vorgesehen, welches folgende Merkmale aufweisen kann:
Eine Busschnittstelle, die zum Anschließen des Ankopplungsmoduls an einen Datenbus ausgebildet ist, wobei dem Ankopplungsmodul eine eindeutige Adresse zugeordnet ist, eine elektrooptische Wandlereinrichtung mit einer optischen Sende- und Empfangseinrichtung,
eine einzige Lichtwellenleiter-Anschlusseinrichtung, die zum Anschließen eines einzigen sekundären Kommunikationsgeräts mittels wenigstens eines Lichtwellenleiters ausgebildet ist,
eine Speichereinrichtung, in der eine Software gespeichert ist, und
eine Steuer- und Auswerteeinrichtung, die dazu ausgebildet ist, unter Ausführung der im Ankopplungsmodul gespeicherten Software das Ankopplungsmodul zu veranlassen, aus einem an der Busschnittstelle ankommenden Kommunikationstelegramm, welches eine erste Adresse, die einem sekundären Kommunikationsgerät zugeordnet ist, und eine zweite Adresse, die einem Ankopplungsmodul zugeordnet ist, enthält, die zweite Adresse auszulesen und das Kommunikationstelegramm nur dann über die elektrooptische Wandlereinrichtung der einzigen Lichtwellenleiter-Anschlusseinrichtung zu zuführen, wenn die ausgelesene zweite Adresse mit der dem Ankopplungsmodul zugeordneten eindeutigen Adresse übereinstimmt.

Gemäß einem vorteilhaften Ausführungsbeispiel kann die elektrooptische Wandlereinrichtung eine Licht-emittierende Einrichtung aufweisen, die nicht nur als Lichtsender, sondern im Empfangsfall auch als Empfänger-Fotodiode eingesetzt werden kann. In diesen Fall weist die Lichtwellenleiter-Anschlusseinrichtung lediglich einen Anschluss zum Anschließen eines einzigen Lichtwellenleiters auf, der sowohl im Sende- als auch im Empfangsbetrieb verwendet werden kann. Dies ist insbesondere dann möglich, wenn das Ankopplungsmodul im Halbduplex-Betrieb arbeiten soll.

Soll ein Vollduplex-Kommunikationsbetrieb gewährleistet werden, so weist die elektrooptische Wandlereinrichtung zwei getrennte elektrooptische Wandler auf, nämlich eine für den optischen Sendebetrieb und eine für den optischen Empfangsbetrieb. In diesem Fall weist die einzige Lichtwellenleiter-Anschlusseinrichtung zwei separate Anschlüsse auf, an die jeweils ein Lichtwellenleiter für den Sendebetrieb und ein Lichtwellenleiter für den Empfangsbetrieb angeschlossen werden kann.

Gemäß einer vorteilhaften Ausgestaltung kann die Steuer- und Auswerteeinrichtung des Ankopplungsmoduls dazu ausgebildet sein, unter Ausführung der im Ankopplungsmodul gespeicherten Software das Ankopplungsmodul zu veranlassen, die zweite Adresse aus dem Kommunikationstelegramm zu entfernen und nur das entsprechend bearbeitete Kommunikationstelegramm über die einzige Lichtwellenleiter-Anschlusseinrichtung auszusenden.

Die Busschnittstelle des Ankopplungsmoduls kann als serielle Busschnittstelle ausgebildet sein.

Gemäß einer vorteilhaften Weiterbildung kann die Steuer- und Auswerteeinrichtung des Ankopplungsmoduls ferner dazu ausgebildet sein, unter Ausführung der im Ankopplungsmodul gespeicherten Software das Ankopplungsmodul zu veranlassen, ein an der einzigen Lichtwellenleiter-Anschlusseinrichtung ankommendes Kommunikationstelegramm, welches eine Adresse, die einem sekundären Kommunikationsgerät eindeutig zugeordnet ist, enthält, mittels der elektrooptischen Wandlereinrichtung über die Busschnittstelle zu versenden.

Gemäß einer vorteilhaften Ausgestaltung kann die Steuer- und Auswerteeinrichtung des Ankopplungsmoduls dazu ausgebildet sein, unter Ausführung der im Ankopplungsmodul gespeicherten Software das Ankopplungsmodul zu veranlassen, die an der Busschnittstelle ankommenden Segmente eines segmentierten Kommunikationstelegramms wieder zu dem ursprünglichen Kommunikationstelegramm zusammenzufügen.

Das oben genannte technische Problem wird ebenfalls durch die Merkmale des Anspruchs 11 gelöst. Vorteilhafte Ausgestaltungen und Weiterbildungen sind Gegenstand der Ansprüche 12 bis 15.

Das Kommunikationssystem ist insbesondere zum Einsatz in der Fernwirk- oder Stationsleittechnik geeignet.

Das Kommunikationssystem kann folgende Merkmale aufweisen:

Einen Datenbus, ein primäres Kommunikationsgerät nach einem der Ansprüche 1 bis 5, das an dem

Datenbus angeschlossen ist, mehrere erste Ankopplungsmodule nach einem der Ansprüche 6 bis 10, die jeweils an dem Datenbus angeschlossen sind, wobei jedem der ersten Ankopplungsmodule eine eindeutige Adresse zugeordnet ist.

An die einzige Lichtwellenleiter-Anschlusseinrichtung jedes der Ankopplungsmodule ist ein einziges erstes sekundäres Kommunikationsgerät über wenigstens einen Lichtwellenleiter angeschlossen, wobei jedem der ersten sekundären Kommunikationsgeräte eine eindeutige Adresse zugeordnet ist, wobei n, d. h. die Anzahl der Kopiervorgänge, gleich der Anzahl der ersten Ankopplungsmodule ist. Angemerkt sei, dass n als einstellbarer bzw. programmierbarer Parameter in dem primären Kommunikationsgerät gespeichert werden kann.

Jedes der ersten sekundären Kommunikationsgeräte weist eine Speichereinrichtung, in der eine Software gespeichert ist, eine Lichtwellenleiter-Anschlusseinrichtung, eine elektrooptische Wandlereinrichtung mit einer optischen Sende- und

Empfangseinrichtung und eine Steuer- und Auswerteeinrichtung auf. Die Steuer-und Auswerteeinrichtung jedes der ersten sekundären Kommunikationsgeräte ist dazu ausgebildet, unter Ausführung der im ersten sekundären Kommunikationsgerät gespeicherten Software das erste sekundäre Kommunikationsgerät zu veranlassen,
- aus einem über die Lichtwellenleiter-Anschlusseinrichtung empfangenen Kommunikationstelegramm, welches eine erste Adresse enthält, die erste Adresse auszulesen und auf Übereinstimmung mit der dem jeweiligen ersten sekundären Kommunikationsgerät zugeordneten eindeutigen Adresse zu prüfen, und
- bei Übereinstimmung in Abhängigkeit von dem empfangenen Kommunikationstelegramm ein Antworttelegramm zu erzeugen und dieses über die elektrooptische Wandlereinrichtung der Lichtwellenleiter-Anschlusseinrichtung zum Versenden zuzuführen.

Der Datenbus ist vorzugsweise als serieller Bus ausgebildet. Der Datenbus kann beispielsweise auch ein Peripheriebus sein. In diesem Fall können das primäre Kommunikationsgerät und die Ankopplungsmodule vorzugsweise in einem gemeinsamen Gehäuse untergebracht sein.

Gemäß einer vorteilhaften Weiterbildung kann das primäre Kommunikationsgerät dazu ausgebildet sein, an seiner Busschnittstelle ein Antworttelegramm von einem der ersten sekundären Kommunikationsgeräte zu empfangen, wobei die Steuereinheit des primären Kommunikationsgeräts dazu ausgebildet sein kann, unter Ausführung der im primären Kommunikationsgerät gespeicherten Software das empfangene Antworttelegramm auszuwerten und/oder weiterzuleiten und/oder zu verarbeiten.

Um die Flexibilität und Einsatzmöglichkeiten des Kommunikationssystems zu erhöhen, können mehrere zweite Ankopplungsmodule nach einem der Ansprüche 6 bis 10 vorgesehen sein, die jeweils an dem Datenbus angeschlossen sind. Jedem der zweiten Ankopplungsmodule ist wiederum eine eindeutige Adresse zugeordnet, wobei an die einzige Lichtwellenleiter-Anschlusseinrichtung jedes der zweiten Ankopplungsmodule ein zweites sekundäres Kommunikationsgerät über wenigstens einen Lichtwellenleiter angeschlossen ist, wobei jedem der zweiten sekundären Kommunikationsgeräte eine eindeutige Adresse zugeordnet ist. Das primäre Kommunikationsgerät und die ersten Ankopplungsmodule können als eine erste Kommunikationsgruppe betrachtet werden, wohingegen das primäre Kommunikationsgerät und die zweiten Ankopplungsmodule als eine zweite Kommunikationsgruppe betrachtet werden können. Die Steuereinheit des primären Kommunikationsgeräts ist vorzugsweise ferner dazu ausgebildet, unter Ausführung der im primären Kommunikationsgerät gespeicherten Software das primäre Kommunikationsgerät zu veranlassen,
- ein zweites Kommunikationstelegramm für ein vorbestimmtes zweites sekundäres Kommunikationsgerät bereitzustellen,
- in das zweite Kommunikationstelegramm eine erste Adresse, die dem vorbestimmten zweiten sekundären Kommunikationsgerät zugeordnet ist, einzufügen,
- das zweite Kommunikationstelegramm m-mal zu kopieren wobei m größer als 1 und gleich der Anzahl der zweiten Ankopplungsmodule ist,
- in jedes der kopierten Kommunikationstelegramme eine zweite Adresse einzufügen, wobei die zweiten Adressen unterschiedlich sind und jeweils einem der zweiten Ankopplungsmodule zugeordnet sind, und
- jedes der kopierten Kommunikationstelegramme über die Busschnittstelle zu versenden.

Um die Flexibilität und Einsatzmöglichkeiten noch weiter zu steigern, kann ein weiterer Datenbus vorgesehen sein, an dem das primäre Kommunikationsgerät und mehrere dritte Ankopplungsmodule nach einem der Ansprüche 7 bis 11 angeschlossen sind. Jedem der dritten Ankopplungsmodule ist eine eindeutige Adresse zugeordnet, wobei an die einzige Lichtwellenleiter-Anschlusseinrichtung jedes der dritten Ankopplungsmodule ein drittes sekundäres Kommunikationsgerät über wenigstens einen Lichtwellenleiter angeschlossen ist. Jedem der dritten sekundären Kommunikationsgeräte ist eine eindeutige Adresse zugeordnet.

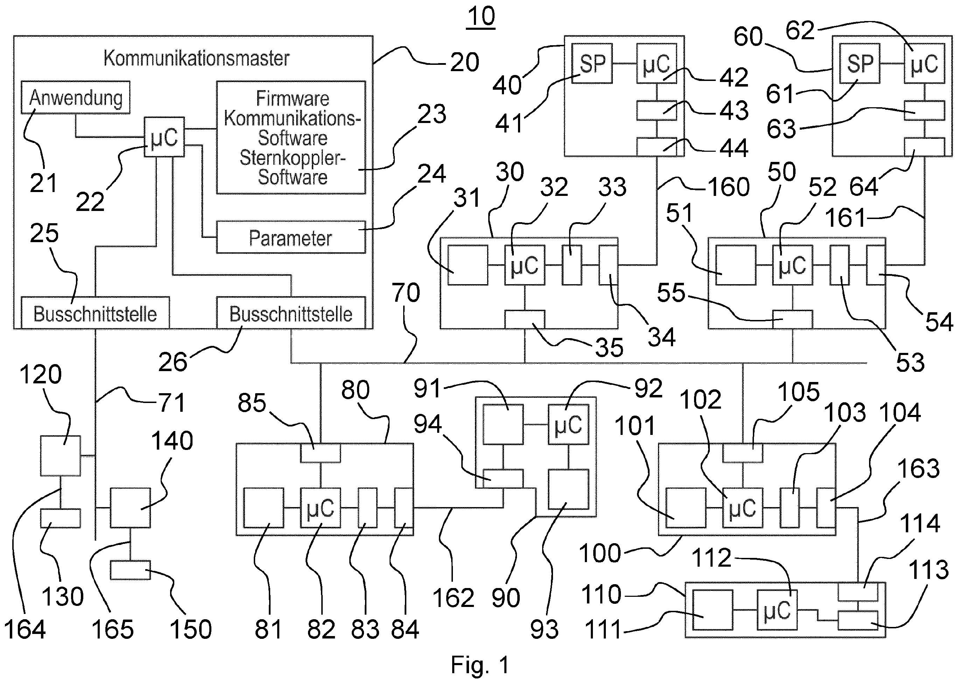

Die Erfindung wird nachfolgend in Verbindung mit der einzigen Figur 1 näher erläutert.

In Figur 1 ist ein beispielhaftes Kommunikationssystem 10 dargestellt, welches beispielsweise in der Fernwirk- oder Stationsleittechnik eingesetzt werden kann.

Das beispielhafte Kommunikationssystem weist vorzugsweise ein primäres Kommunikationsgerät 20 auf, welche beispielsweise als Kommunikations-Master betrieben werden kann. Das primäre Kommunikationsgerät 20 kann als Steuergerät, beispielsweise als speicherprogrammierbare Steuerung fungieren.

Das beispielhafte primäre Kommunikationsgerät 20 weist unter anderem eine Busschnittstelle 26 auf, die zum Anschließen des primären Kommunikationsgerätes 20 an einen Datenbus 70 ausgebildet ist. Bereits an dieser Stelle sei angemerkt, dass der Datenbus vorzugsweise zur Bit-seriellen Datenübertragung ausgebildet ist. Der Datenbus kann auch ein Peripheriebus sein.

An den Datenbus können mehrere Ankopplungsmodule angeschlossen werden. Gemäß dem beispielhaften Kommunikationssystem 10 sind an dem Datenbus 70 beispielsweise vier Ankopplungsmodule 30, 50, 80 und 110 angeschlossen. Hierzu weisen die Ankopplungsmodule 30, 50, 80 und 110 jeweils eine Busschnittstelle 35, 55, 85 bzw. 105 auf. Bereits an dieser Stelle sei erwähnt, dass die Busschnittstellen 26, 35, 55, 85 und 105 beispielsweise gemäß dem Modbus-Kommunikationsprotokoll, gemäß einem Kommunikationsprotokoll nach dem Standard IEC60870-5-101 oder dem Standard IEC60870-5-103 ausgebildet sein können.

Das primäre Kommunikationsgerät 20 kann beispielsweise eine weitere Busschnittstelle 25 aufweisen, die zum Anschließen des primären Kommunikationsgeräts an einen weiteren Datenbus 71 ausgebildet ist. Auch die Busschnittstelle 25 kann beispielsweise gemäß dem Modbus-Kommunikationsprotokoll, gemäß einem Kommunikationsprotokoll nach dem Standard IEC60870-5-101 oder dem Standard IEC60870-5-103 ausgebildet sein. An den weiteren Datenbus 71 können in ähnlicher Weise wie an den Datenbus 70 weitere Anschlussmodule angeschlossen werden, wobei gemäß dem beispielhaften Kommunikationssystem zwei Anschlusskopplungen 120 und 140 gezeigt sind.

Das beispielhafte primäre Kommunikationsgerät 20 weist ferner vorzugsweise eine Speichereinrichtung 23 auf, in der eine Software zum Überwachen und Steuern des primären Kommunikationsgeräts 20 gespeichert ist. Die Speichereinrichtung kann mehrere separate Speicher aufweisen. Ferner ist im primären Kommunikationsgerät eine Steuereinheit 22 angeordnet, die als Mikrocontroller oder Mikroprozessor ausgebildet sein kann.

Die Steuereinheit 22 ist dazu ausgebildet, unter Ausführung der in der Speichereinrichtungen 23 gespeicherten Software das primäre Kommunikationsgerät 20 zu veranlassen,
a) ein Kommunikationstelegramm für ein vorbestimmtes sekundäres Kommunikationsgerät zu erzeugen bzw. bereitzustellen,
b) in das Kommunikationstelegramm eine erste Adresse, die dem vorbestimmten sekundären Kommunikationsgerät zugeordnet ist, einzufügen,
c) das Kommunikationstelegramm n-mal zu kopieren, wobei n größer als 1 ist,
d) in jedes der kopierten Kommunikationstelegramme eine zweite Adresse einzufügen, wobei die zweiten Adressen unterschiedlich sind und jeweils einem separaten Ankopplungsmodul zugeordnet sind, und
e) jedes der kopierten Kommunikationstelegramme über die Busschnittstelle 26 oder, falls das primäre Kommunikationsgerät 20 die weitere Busschnittstelle 25 aufweist, über die weitere Busschnittstelle 25 zu übertragen.

Vorteilhafterweise umfasst die Software ein erstes Programm, das ein Kommunikationsprotokoll, welches einen Master/Slave-Betrieb unterstützt implementiert, und ein zweites Programm, das eine Sternkoppler Funktionalität implementiert. Vorzugsweise umfasst die Software auch eine Firmware oder ein Betriebssystem.

Angemerkt sei an dieser Stelle, dass die Steuereinheit 22 unter Ausführung des ersten Programms das primäre Kommunikationssystem 20 veranlasst, die Schritte a) und b) auszuführen. Vorteilhafterweise veranlasst die Steuereinheit 22 unter Ausführung des zweiten Programms das primäre Kommunikationsgerät 20, die Schritte c) bis e) auszuführen.

Das erste Programm kann, wenn es von der Steuereinheit 22 ausgeführt wird, das primäre Kommunikationsgerät veranlassen, beispielsweise eine serielle Datenübertragung zu steuern, wobei als Kommunikationsprotokoll beispielsweise ein Modbus-Protokoll, ein Kommunikationsprotokoll gemäß dem Standard IEC60870-5-101 oder gemäß dem Standard IEC60870-5-103 verwendet werden kann. Die Busschnittstelle 26 und, sofern vorhanden, die Busschnittstelle 25 können als serielle Busschnittstelle ausgebildet sein.

Um eine flexible, d.h. von der Übertragungsgeschwindigkeit entkoppelte Datenübertragung zu ermöglichen, kann die Steuereinheit 22 dazu ausgebildet sein, unter Ausführung der in dem primären Kommunikationsgerät 20 gespeicherten Software und genauer unter Ausführung des ersten Programms das primäre Kommunikationsgerät 20 zu veranlassen, zumindest einige der kopierten Kommunikationstelegramme zu segmentieren und die Segmente jedes segmentierten Kommunikationstelegramms einzeln über die Busschnittstelle 26 oder, sofern vorhanden, über die Busschnittstelle 25 zu versenden. In dem primären Kommunikationsgerät 20 kann eine weitere Speichereinrichtung 21 vorgesehen sein, in der wenigstens ein Anwendungsprogramm gespeichert ist, welches beispielsweise den Funktionsbaustein eines Kommunikations-Masters und/oder Anweisungen zur Steuerung eines speziellen Anwendungsfalls enthält.

Wie bereits weiter oben erläutert, weist jedes Ankopplungsmodul eine Busschnittstelle zum Anschließen an den Datenbus 70 bzw. den Datenbus 71 auf.

Da die Ankopplungsmodule vorzugsweise identisch oder ähnlich aufgebaut und betrieben werden können, wird nachfolgend der beispielhafte Aufbau und eine beispielhafte Funktionsweise der Ankopplungsmodule vornehmlich anhand des Ankopplungsmoduls 30 erläutert. Die nachfolgenden Erläuterungen hinsichtlich des Ankopplungsmoduls 30 treffen somit auch auf die Ankopplungsmodule 50, 80, 100, 120 und 140 zu.

Das Ankopplungsmodul 30 weist eine elektrooptische Wandlereinrichtung 33 mit einer optischen Sende- und Empfangseinrichtung auf. Je nach Implementierung kann die elektrooptische Wandlereinrichtung zwei separate elektrooptische Wandler aufweisen, nämlich einen zum Aussenden von Lichtsignalen und einen zum Empfangen von Lichtsignalen. Auf diese Weise ist eine Vollduplex-Datenübertragung möglich. Für den Fall, dass ein Halbduplex-Kommunikationsbetrieb implementiert werden soll, kann die elektrooptische Wandlereinrichtung 33 ein Licht emittierendes Bauelement, beispielsweise eine LED aufweisen, die im Sendebetrieb als Lichtsender, und im Empfangsbetrieb als Fotodiode fungieren kann.

Weiterhin weist das Ankopplungsmodul 30 eine einzige mit der elektrooptischen Wandlereinrichtung 33 verbundene Lichtwellenleiter-Anschlusseinrichtung 34 auf, die in Abhängigkeit davon, ob ein Vollduplexbetrieb oder ein Halbduplex-Kommunikationsbetrieb implementiert ist, einen einzigen Anschluss zum Anschließen eines einzigen Lichtwellenleiters 160 oder zwei Anschlüsse aufweist, an die jeweils ein Lichtwellenleiter zum Empfangen und ein zweiter Lichtwellenleiter zum Senden von Lichtsignalen angeschlossen werden kann. Im vorliegenden Beispiel sei der Einfachheit halber angenommen, dass das Kommunikationssystem 10 in einem Halbduplex-Betrieb betrieben werden soll. Deshalb weist die elektrooptische Wandlereinrichtung 33 ein einziges Licht emittierendes Bauelement zum Senden und Empfangen von Lichtsignalen aufweist. Angemerkt sei an dieser Stelle, dass Funktionsweise elektrooptische Wandlereinrichtungen an sich bekannt ist. Beim vorliegenden Ausführungsbeispiel wandelt die elektrooptische Wandlereinrichtung 33 im Sendebetrieb elektrische Signale, die ein Kommunikationstelegramm darstellen, in Lichtsignale um, die über die Lichtwellenleiter-Anschlusseinrichtung 34 ausgesendet werden, während sie im Empfangsbetrieb die an der Lichtwellenleiter-Anschlusseinrichtung 34 ankommenden Lichtsignale in elektrische Signale, die wiederum ein Kommunikationstelegramm darstellen, umwandelt und der Busschnittstelle 35 zuführt.

An die einzige Lichtwellenleiter- Anschlusseinrichtung 34 des Ankopplungsmoduls 30 kann ein einziges sekundäres Kommunikationsgerät 40 mittels wenigstens eines Lichtwellenleiters 160 angeschlossen werden. Weiterhin kann das Ankopplungsmodul 30 eine Speichereinrichtung 31 aufweisen, in der eine Software gespeichert ist. Ferner weist vorzugsweise das Ankopplungsmodul 30 eine Steuer- und Auswerteeinrichtung 32 auf, die dazu ausgebildet ist, unter Ausführung der in der Speichereinrichtung 31 gespeicherten Software das Ankopplungsmodul 30 zu veranlassen, aus einem an der Busschnittstelle 35 ankommenden elektrischen Kommunikationstelegramm, welches eine erste Adresse, die einem sekundären Kommunikationsgerät zugeordnet ist, und eine zweite Adresse, die einem Ankopplungsmodul zugeordnet ist, enthält, die zweite Adresse auszulesen und das Kommunikationstelegramm nur dann über die elektrooptische Wandlereinrichtung 33 der einzigen Lichtwellenleiter-Anschlusseinrichtung 34 zuzuführen, wenn die ausgelesene zweite Adresse mit der dem Ankopplungsmodul 30 zugeordneten eindeutigen Adresse übereinstimmt. Angemerkt sei, dass die eindeutige Adresse des Ankopplungsmoduls 30 ebenfalls in der Speichereinrichtung 31 gespeichert sein kann. Vorteilhafterweise ist die Steuer-und Auswerteeinrichtung 32 des Ankopplungsmoduls 30 dazu ausgebildet, unter Ausführung der in der Speichereinrichtung 31 gespeicherten Software das Ankopplungsmodul 30 zu veranlassen, die zweite Adresse aus dem Kommunikationstelegramm zu entfernen und das so bearbeitete Kommunikationstelegramm der elektrooptischen Wandlereinrichtung 33 zuzuführen. Angemerkt sei noch, dass es sich bei der Steuer- und Auswerteeinrichtung 32 um einen Mikrocontroller oder einen Mikroprozessor handeln kann.

Die Steuer- und Auswerteeinrichtung 32 kann ferner dazu ausgebildet sein, unter Ausführung der in der Speichereinrichtung 31 gespeicherten Software das Ankopplungsmodul 30 zu veranlassen, ein an der einzigen Lichtwellenleiter-Anschlusseinrichtung 34 ankommendes Lichtsignal, welches ein Kommunikationstelegramm darstellt, welches eine Adresse, die dem sekundären Kommunikationsgerät 40 eindeutig zugeordnet ist, enthält, über die elektrooptische Wandlereinrichtung 33 als elektrisches Signal der Busschnittstelle 35 zur Versendung über den Datenbus 70 zuzuführen. Weiterhin kann die Steuer-und Auswerteeinrichtung 32 des Ankopplungsmoduls 30 dazu ausgebildet sein, unter Ausführung der in der Speichereinrichtung 31 gespeicherten Software das Ankopplungsmodul 30 zu veranlassen, die an der Busschnittstelle 35 ankommenden Segmente eines segmentierten Kommunikationstelegramms wieder zu dem ursprünglichen Kommunikationstelegramm zusammenzufügen.

Die übrigen Ankopplungsmodule 50, 80, 100, 120 und 140 weisen ebenfalls eine Steuer- und Auswerteeinheit 52, 82 bzw. 102, eine Speichereinrichtung 51, 81 bzw. 101 zur Speicherung einer Software, eine elektrooptische Wandlereinrichtung 53, 83 bzw. 103 sowie eine einzige Lichtwellenleiter-Anschlusseinrichtung 54, 84 bzw. 104 auf. Der Einfachheit halber sind die entsprechenden Komponenten in den Anschlusskopplungen 120 und 140 nicht dargestellt.

Lediglich beispielhaft sei angenommen, dass das beispielhafte Kommunikationssystem 10, wie bereits erwähnt, den Halbduplex-Kommunikationsbetrieb unterstützt. Dies bedeutet, dass alle elektrooptischen Wandlereinrichtungen, d. h. auch die Wandlereinrichtungen 53, 83 und 103 jeweils ein einziges Licht emittierendes Bauelement aufweisen, das im Sendebetrieb beispielsweise als Leuchtdiode und im Empfangsbetrieb als Fotodiode fungiert. Dementsprechend weist jede Lichtwellenleiter-Anschlusseinrichtung, und somit auch die Lichtwellenleiter-Anschlusseinrichtung 54, 84 bzw. 104 und die entsprechenden Lichtwellenleiter-Anschlusseinrichtungen der Ankopplungsmodule 120 und 140 jeweils nur einen Anschluss zum Anschließen eines Lichtwellenleiters 161, 162, 163, 164 bzw. 165 auf, der sowohl für den Sende- als auch für den Empfangsbetrieb verwendet wird. Wie Figur 1 weiter zeigt, ist an die einzige Lichtwellenleiter-Anschlusseinrichtung 54 des Ankopplungsmoduls 50 ein sekundäres Kommunikationsgerät 60 über den Lichtwellenleiter 161, an die einzige Lichtwellenleiter-Anschlusseinrichtung 84 des Ankopplungsmodul 80 ein sekundäres Kommunikationsgerät 90 über den Lichtwellenleiter 162, an die einzige Lichtwellenleiter-Anschlusseinrichtung 104 ein sekundäres Kommunikationsgerät 110 über den Lichtwellenleiter 163, an die einzige Lichtwellenleiter-Anschlusseinrichtung des Ankopplungsmoduls 120 ein sekundäres Kommunikationsgerät 130 über den Lichtwellenleiter 164 und an die einzige Lichtwellenleiter-Anschlusseinrichtung des Ankopplungsmoduls 140 ein sekundäres Kommunikationsgerät 150 über den Lichtwellenleiter 165 angeschlossen.

Ähnlich dem sekundären Kommunikationsgerät 40 könne die sekundären Kommunikationsgeräte 60, 90 und 110 jeweils eine Speichereinrichtung 61, 91, bzw. 111, eine Steuereinheit 62, 92 bzw. 112, eine elektrooptische Wandlereinrichtung 63, 93 bzw. 113 und eine Lichtwellenleiter-Anschlusseinrichtung 64, 94 bzw. 114 aufweisen. Die sekundären Kommunikationsgeräte 130 und 150 können vorzugsweise die gleichen Komponenten (nicht dargestellt) aufweisen.

Jedem der sekundären Kommunikationsgeräte 40, 60, 90, 110, 130 und 150 ist vorzugsweise eine eindeutige Adresse und, je nach Implementierung, beispielsweise eine Broadcast-Adresse zugeordnet, die in der jeweiligen Speichereinrichtung hinterlegt sein können.

Die Steuer- und Auswerteeinrichtung 42 des sekundären Kommunikationsgeräts 40 kann dazu ausgebildet sein, unter Ausführung der in der Speichereinbrichtung 41 hinterlegten Software das sekundäre Kommunikationsgerät 40 zu veranlassen, aus einem über die Lichtwellenleiter-Anschlusseinrichtung 44 empfangenen Kommunikationstelegramm, welches eine erste Adresse enthält, die erste Adresse auszulesen und auf Übereinstimmung mit der dem sekundären Kommunikationsgerät 40 zugeordneten eindeutigen Adresse zu prüfen und bei Übereinstimmung in Abhängigkeit von dem empfangenen Kommunikationstelegramm eine Antworttelegramm zu erzeugen und dieses über die elektrooptische Wandlereinrichtung 43 zum Versenden der Lichtwellenleiter-Anschlusseinrichtung 44 zuzuführen. Es versteht sich von selbst, dass die an der Lichtwellenleiter-Anschlusseinrichtung 44 empfangenen Lichtsignale, welche das Kommunikationstelegramm repräsentieren, zunächst mittels der elektrooptischen Wandlereinrichtung 43 in ein elektrisches Signal umgewandelt werden, welches dann der Steuer- und Auswerteeinrichtung 42 zur weiteren Verarbeitung zugeführt wird. Angemerkt sei, dass der Aufbau und die Funktionsweise der übrigen sekundären Kommunikationsgeräte identisch oder zumindest ähnlich der Funktionsweise und dem Aufbau des sekundären Kommunikationsgeräts 40 sein können. Deshalb treffen die Erläuterungen hinsichtlich des sekundären Kommunikationsgeräts 40 auch auf die sekundären Kommunikationsgeräte 60, 90, 110, 130 und 150 zu.

Die Funktionsweise des beispielhaften Kommunikationssystems 10 wird nachfolgend anhand einiger beispielhafter Szenarien erläutert.

### 1. beispielhaftes Szenario

Zunächst sei angenommen, dass die optionale Busschnittstelle 25 des primären Kommunikationsgerät 20 deaktiviert oder überhaupt nicht vorhanden ist. Weiterhin sei gemäß dem ersten Szenario eine Kommunikationsinfrastruktur angenommen, nach der das primäre Kommunikationsgerät 20, die Ankopplungsmodule 30, 50, 80 und 100 sowie die sekundären Kommunikationsgeräte 40, 60, 90 und 110 eine Kommunikationsgruppe bilden. Weiterhin sei der Einfachheit halber angenommen, dass es sich bei den sekundären Kommunikationsgeräten 40, 60, 90 und 110 um Temperatursensoren handelt und das gemäß einem beispielhaften Anwendungsfall das als Kommunikationsmaster fungierende primäre Kommunikationsgerät 20 Temperaturwerte von den sekundären Kommunikationsgeräten 40, 60, 90 und 110 abfragen soll.

Nunmehr startet das primäre Kommunikationsgerät 20 beispielsweise das in der Speichereinrichtungen 21 hinterlegte Anwendungsprogramm und erzeugt unter Ausführung des in der Speichereinrichtung 23 hinterlegten ersten Programms ein Kommunikationstelegramm für ein vorbestimmtes sekundäres Kommunikationsgerät, in diesem Fall zunächst für das sekundäre Kommunikationsgerät 40. Unter Ausführung des ersten Programms veranlasst die Steuereinheit 22 das primäre Kommunikationsgerät 20, in das Kommunikationstelegramm als erste Adresse die dem sekundären Kommunikationsgerät 40 eindeutig zugeordnete Adresse einzufügen. Ferner wird ein Befehl in das Kommunikationstelegramm eingefügt, mit dem ein sekundäres Kommunikationsgerät aufgefordert wird, seine aktuellen Temperaturdaten zu übertragen. Dem primären Kommunikationsgerät 20 bzw. dem zweiten Programm ist die Konfiguration der Kommunikationsinfrastruktur des Kommunikationssystems 10 bekannt ist, d. h. es kennt die eindeutigen Adressen der Ankopplungsmodule 30, 50, 80 und 100 und den Parameter n, der der Anzahl der Ankopplungsmodule der Kommunikationsgruppe entspricht. Der Parameter n ist im vorliegenden Fall 4. Folglich veranlasst die Steuereinheit 22 unter Ausführung vorzugsweise des zweiten Programms, welches die Sternkoppler-Funktionalität implementiert, dass primäre Kommunikationsgerät 20, dass erzeugte Kommunikationstelegramm mit der Adresse des sekundären Kommunikationsgerät 40 viermal zu kopieren und in jedes der vier kopierten Kommunikationstelegramme eine zweite Adresse einzufügen, wobei die zweiten Adressen unterschiedlich sind und jeweils einem der Ankopplungsmodule 30, 50, 80 und 100 zugeordneten sind. Mit anderen Worten: In das erste kopierte Kommunikationstelegramm wird die eindeutige Adresse des Ankopplungsmoduls 30, in das zweite kopierte Kommunikationstelegramm die eindeutige Adresse des Ankopplungsmoduls 50, in das dritte kopierte Kommunikationstelegramm die eindeutige Adresse des Ankopplungsmoduls 80 und in das vierte kopierte Kommunikationstelegramm die eindeutige Adresse des Ankopplungsmoduls 100 eingefügt. Weiterhin veranlasst die Steuereinheit 22 vorzugsweise unter Ausführung des zweiten Programms das primäre Kommunikationsgerät 20, alle vier kopierten Kommunikationstelegramme nacheinander über die Busschnittstelle 26 und über den Bus 70 zu übertragen. Die als elektrische Signale über den Bus 70 übertragenen vier kopierten Kommunikationstelegramme werden jeweils an den Busschnittstellen 35, 55, 85 und 105 der den Ankopplungsmodulen 30, 50, 80 bzw. 100 empfangen. Die Steuer-und Auswerteeinrichtung jedes der Ankopplungsmodule 30, 50, 80 und 100 veranlasst das jeweilige Ankopplungsmodul unter Ausführung der gespeicherten Software, aus jedem der vier kopierten Kommunikationstelegramme, die an der jeweiligen Busschnittstelle ankommen, die zweite Adresse, welche eine eindeutige Adresse eines Ankopplungsmoduls repräsentiert, auszulesen und mit der im jeweiligen Ankopplungsmodul gespeicherten eindeutigen Adresse zu vergleichen. Nur das kopierte Kommunikationstelegramm wird dann über die elektrooptische Wandlereinrichtung der einzigen Lichtwellenleiter-Anschlusseinrichtung zugeführt, dessen ausgelesene zweite Adresse mit der dem jeweiligen Ankopplungsmodul zugeordneten eindeutigen Adresse übereinstimmt.

Das bedeutet für den vorliegenden Fall, dass
- nur die Steuer- und Auswerteeinrichtung 32 das Ankopplungsmodul 30 veranlasst, das erste kopierte Kommunikationstelegramm, welches die eindeutige Adresse des Ankopplungsmoduls 30 enthält, über die elektrooptische Wandlereinrichtung 33 der einzigen Lichtwellenleiter-Anschlusseinrichtung 34 zuzuführen und als Lichtsignal über den Lichtwellenleiter 160 zum sekundären Kommunikationsgerät 40 zu übertragen Anzumerken ist noch, dass die zweite Adresse vorzugsweise aus dem ersten kopierten Kommunikationstelegramm vor dem Weitersenden entfernt wird,
- nur die Steuer- und Auswerteeinrichtung 52 das Ankopplungsmodul 50 veranlasst, das zweite kopierte Kommunikationstelegramm, welches die eindeutige Adresse des Ankopplungsmoduls 50 enthält, über die elektrooptische Wandlereinrichtung 53 der einzigen Lichtwellenleiter-Anschlusseinrichtung 54 zuzuführen und als Lichtsignal über den Lichtwellenleiter 161 zum sekundären Kommunikationsgerät 60 zu übertragen Anzumerken ist noch, dass die zweite Adresse vorzugsweise aus dem zweiten kopierten Kommunikationstelegramm vor dem Weitersenden entfernt wird,
- nur die Steuer- und Auswerteeinrichtung 82 das Ankopplungsmodul 80 veranlasst, das dritte kopierte Kommunikationstelegramm, welches die eindeutige Adresse des Ankopplungsmoduls 80 enthält, über die elektrooptische Wandlereinrichtung 83 der einzigen Lichtwellenleiter-Anschlusseinrichtung 84 zuzuführen und als Lichtsignal über den Lichtwellenleiter 162 zum sekundären Kommunikationsgerät 90 zu übertragen Anzumerken ist noch, dass die zweite Adresse vorzugsweise aus dem dritten kopierten Kommunikationstelegramm vor dem Weitersenden entfernt wird, und
- nur die Steuer- und Auswerteeinrichtung 102 das Ankopplungsmodul 100 veranlasst, das vierte kopierte Kommunikationstelegramm, welches die eindeutige Adresse des Ankopplungsmoduls 100 enthält, über die elektrooptische Wandlereinrichtung 103 der einzigen Lichtwellenleiter-Anschlusseinrichtung 104 zuzuführen und als Lichtsignal über den Lichtwellenleiter 163 zum sekundären Kommunikationsgerät 110 zu übertragen Anzumerken ist noch, dass die zweite Adresse vorzugsweise aus dem vierten kopierten Kommunikationstelegramm vor dem Weitersenden entfernt wird.

Auf diese Weise wird das vom primären Kommunikationsgerät 20 erzeugte Kommunikationstelegramm, welches für das sekundäre Kommunikationsgerät 40 bestimmt ist, über die jeweiligen Lichtwellenleiter in kopierter Form zu allen sekundären Kommunikationsgeräten 40, 60, 90 und 110 übertragen. Allerdings wird das empfangene Kommunikationstelegramm nur vom sekundären Kommunikationsgerät 40 akzeptiert und von allen anderen sekundären Kommunikationsgeräten verworfen. Denn in jedem empfangenen Kommunikationstelegramm ist als erste Adresse die eindeutige Adresse des sekundären Kommunikationsgeräts 40 enthalten. Insbesondere wird hierzu zunächst das erste kopierte, als Lichtsignal empfangene Kommunikationstelegramm über die elektrooptische Wandlereinrichtung 43 in ein entsprechendes elektrisches Kommunikationstelegramm umgewandelt. Die Steuer-und Auswerteeinrichtung 42 veranlasst unter Ausführung der in der Speichereinrichtung 41 hinterlegten Software das sekundäre Kommunikationsgerät 40, die erste Adresse aus dem empfangenen Kommunikationstelegramm auszulesen und auf Übereinstimmung mit der in der Speichereinrichtung 41 hinterlegten eindeutigen Adresse des sekundären Kommunikationsgerätes zu vergleichen. Nur die Steuer- und Auswerteeinrichtung 42 stellt eine Übereinstimmung zwischen der in dem Kommunikationstelegramm enthaltenen ersten Adresse und der dem sekundären Kommunikationsgerät 40 eindeutig zugeordneten Adresse fest. Demzufolge veranlasst lediglich die Steuer- und Auswerteeinrichtung 42 das sekundären Kommunikationsgeräts 40 unter Ansprechen auf den im Kommunikationstelegramm enthaltenen Befehl, ein Antworttelegramm, in welchem die aktuelle Temperatur und die eindeutige Adresse des sekundären Kommunikationsgeräts 40 gespeichert ist, zu erzeugen, und dieses Antworttelegramm über die elektrooptische Wandlereinrichtung 43 der Lichtwellenleiter-Anschlusseinrichtung 44 als Lichtsignal zuzuführen und über den Lichtwellenleiter 160 zum Ankopplungsmodul 30 zu übertragen.

Das Ankopplungsmodul 30 empfängt das optische Antworttelegramm an der Lichtwellenleiter-Anschlusseinrichtung 34, welches mittels der elektrooptischen Wandlereinrichtung 33 in ein entsprechendes elektrisches Antworttelegramm umgewandelt und über die Busschnittstelle 35 und den Datenbus 70 zum primären Kommunikationsgerät 20 übertragen wird. Die Steuereinheit 22 des primären Kommunikationsgerätes 20 ist dazu ausgebildet, unter Ausführung der im primären Kommunikationsgerät 20 gespeicherten Software, das ist vorzugsweise das zweite Programm, das empfangene Antworttelegramm beispielsweise zu verarbeiten und die darin enthaltenen aktuellen Temperaturwerte an das in der Speichereinrichtung 21 hinterlegte Anwendungsprogramm zur weiteren Verwendung zu übergeben.

Um die aktuellen Temperaturwerte der übrigen sekundären Kommunikationsgeräte 60, 90 und 110 abfragen zu können, werden beispielsweise in der zuvor beschriebenen Art und Weise vom primären Kommunikationsgerät 20 drei weitere Kommunikationstelegramme erzeugt, in die jeweils eine andere der eindeutigen Adresse der sekundären Kommunikationsgeräte 60, 90 und 110 eingefügt wird. Jedes des drei Kommunikationstelegramme wird dann wiederum viermal kopiert und nacheinander über die Busschnittstelle 26 und den Bus 70 zu den Ankopplungsmodulen 30, 50, 80 und 100 übertragen werden. Anschließend wiederholt sich das zuvor ausführlich erläuterte Prozedere für jedes der kopierten Kommunikationstelegramme. Am Ende des beispielhaften Kommunikationszyklus hat das primäre Kommunikationsgerät 20 die aktuellen Temperaturwerte jedes der sekundären Kommunikationsgeräte 40, 60, 90 und 110 erhalten.

### 2. beispielhaftes Szenario

Zunächst sei wiederum angenommen, dass die optionale Busschnittstelle 25 des primären Kommunikationsgerät 20 deaktiviert oder überhaupt nicht vorhanden ist.

Weiterhin sei gemäß dem zweiten Szenario eine Kommunikationsinfrastruktur angenommen, nach der das primäre Kommunikationsgerät 20, die Ankopplungsmodule 30, 50 und die sekundären Kommunikationsgeräte 40, 60 eine erste Kommunikationsgruppe bilden, während das primäre Kommunikationsgerät 20, die Ankopplungsmodule 80, 100 und die sekundären Kommunikationsgeräte 90, 110 eine zweite Kommunikationsgruppe bilden. Weiterhin sei der Einfachheit halber angenommen, dass es sich bei den sekundären Kommunikationsgeräten 40, 60, 90 und 110 um Temperatursensoren handelt und das gemäß einem beispielhaften Anwendungsfall das als Kommunikationsmaster fungierende primäre Kommunikationsgerät 20 Temperaturwerte von den sekundären Kommunikationsgeräten 40, 60, 90 und 110 abfragen soll. Angemerkt sei noch, dass dem primären Kommunikationsgerät 20 bzw. dem zweiten Programm die Konfiguration der Kommunikationsinfrastruktur des Kommunikationssystems 10 bekannt ist, d. h. es kennt die erste Kommunikationsgruppe und somit die eindeutigen Adressen der Ankopplungsmodule 30 und 50, und den Parameter n, der der Anzahl der Ankopplungsmodule der ersten Kommunikationsgruppe entspricht, sowie die zweite Kommunikationsgruppe und somit die eindeutigen Adressen der Ankopplungsmodule 80 und 100, und den Parameter m, der der Anzahl der Ankopplungsmodule der zweiten Kommunikationsgruppe entspricht. Die Parameter n und m sind im vorliegenden Fall jeweils 2.

Nunmehr startet das primäre Kommunikationsgerät 20 die Kommunikation der ersten Kommunikationsgruppe. Hierzu greift das primäre Kommunikationsgerät 20 beispielsweise auf das in der Speichereinrichtungen 21 hinterlegte Anwendungsprogramm zu und erzeugt unter Ausführung des in der Speichereinrichtung 23 hinterlegten ersten Programms ein Kommunikationstelegramm für ein vorbestimmtes sekundäres Kommunikationsgerät, in diesem Fall zunächst für das sekundäre Kommunikationsgerät 40 der ersten Kommunikationsgruppe. Unter Ausführung des ersten Programms veranlasst die Steuereinheit 22 das primäre Kommunikationsgerät 20, in das Kommunikationstelegramm als erste Adresse die dem sekundären Kommunikationsgerät 40 eindeutig zugeordnete Adresse einzufügen. Ferner wird ein Befehl in das Kommunikationstelegramm eingefügt, mit dem ein sekundäres Kommunikationsgerät aufgefordert wird, seine aktuellen Temperaturdaten zu übertragen.

Nunmehr veranlasst die Steuereinheit 22 unter Ausführung vorzugsweise des zweiten Programms, welches die Sternkoppler-Funktionalität implementiert, dass primäre Kommunikationsgerät 20, dass erzeugte Kommunikationstelegramm mit der Adresse des sekundären Kommunikationsgerät 40 2-mal zu kopieren und in jedes der vier kopierten Kommunikationstelegramme eine zweite Adresse einzufügen, wobei die zweiten Adressen unterschiedlich sind und jeweils einem der Ankopplungsmodule 30 und 50 zugeordneten sind. Mit anderen Worten: In das erste kopierte Kommunikationstelegramm wird die eindeutige Adresse des Ankopplungsmoduls 30 und in das zweite kopierte Kommunikationstelegramm die eindeutige Adresse des Ankopplungsmoduls 50 eingefügt. Weiterhin veranlasst die Steuereinheit 22 vorzugsweise unter Ausführung des zweiten Programms das primäre Kommunikationsgerät 20, die beiden kopierten Kommunikationstelegramme nacheinander über die Busschnittstelle 26 und über den Bus 70 zu übertragen. Die beiden jeweils als elektrische Signale über den Bus 70 übertragenen kopierten Kommunikationstelegramme werden jeweils an den Busschnittstellen 35 und 55 der Ankopplungsmodule 30 und 50 empfangen. Die Steuer-und Auswerteeinrichtung jedes der Ankopplungsmodule 30 und 50 veranlasst das jeweilige Ankopplungsmodul unter Ausführung der gespeicherten Software, aus jedem der beiden kopierten Kommunikationstelegramme, die an der jeweiligen Busschnittstelle ankommen, die zweite Adresse, welche eine eindeutige Adresse eines Ankopplungsmoduls repräsentiert, auszulesen und mit der im jeweiligen Ankopplungsmodul gespeicherten eindeutigen Adresse zu vergleichen. Nur das kopierte Kommunikationstelegramm wird dann über die elektrooptische Wandlereinrichtung der einzigen Lichtwellenleiter-Anschlusseinrichtung zugeführt, dessen ausgelesene zweite Adresse mit der dem jeweiligen Ankopplungsmodul zugeordneten eindeutigen Adresse übereinstimmt.

Das bedeutet für den vorliegenden Fall, dass
- nur die Steuer- und Auswerteeinrichtung 32 das Ankopplungsmodul 30 veranlasst, das erste kopierte Kommunikationstelegramm, welches die eindeutige Adresse des Ankopplungsmoduls 30 enthält, über die elektrooptische Wandlereinrichtung 33 der einzigen Lichtwellenleiter-Anschlusseinrichtung 34 zuzuführen und als Lichtsignal über den Lichtwellenleiter 160 zum sekundären Kommunikationsgerät 40 zu übertragen Anzumerken ist noch, dass die zweite Adresse vorzugsweise aus dem ersten kopierten Kommunikationstelegramm vor dem Weitersenden entfernt wird, und
- nur die Steuer- und Auswerteeinrichtung 52 das Ankopplungsmodul 50 veranlasst, das zweite kopierte Kommunikationstelegramm, welches die eindeutige Adresse des Ankopplungsmoduls 50 enthält, über die elektrooptische Wandlereinrichtung 53 der einzigen Lichtwellenleiter-Anschlusseinrichtung 54 zuzuführen und als Lichtsignal über den Lichtwellenleiter 161 zum sekundären Kommunikationsgerät 60 zu übertragen Anzumerken ist noch, dass die zweite Adresse vorzugsweise aus dem zweiten kopierten Kommunikationstelegramm vor dem Weitersenden entfernt wird.

Auf diese Weise wird das vom primären Kommunikationsgerät 20 erzeugte Kommunikationstelegramm, welches für das sekundäre Kommunikationsgerät 40 bestimmt ist, über die jeweiligen Lichtwellenleiter in kopierter Form zu den beiden sekundären Kommunikationsgeräten 40 und 60 übertragen. Allerdings wird das empfangene Kommunikationstelegramm nur vom sekundären Kommunikationsgerät 40 akzeptiert und von dem sekundären Kommunikationsgerät 60 verworfen. Denn in jedem empfangenen Kommunikationstelegramm ist als erste Adresse die eindeutige Adresse des sekundären Kommunikationsgeräts 40 enthalten. Insbesondere wird hierzu zunächst das erste kopierte, als Lichtsignal empfangene Kommunikationstelegramm über die elektrooptische Wandlereinrichtung 43 in ein entsprechendes elektrisches Kommunikationstelegramm umgewandelt. Die Steuer-und Auswerteeinrichtung 42 veranlasst unter Ausführung der in der Speichereinrichtung 41 hinterlegten Software das sekundäre Kommunikationsgerät 40, die erste Adresse aus dem empfangenen Kommunikationstelegramm auszulesen und auf Übereinstimmung mit der in der Speichereinrichtung 41 hinterlegten eindeutigen Adresse des sekundären Kommunikationsgerätes zu vergleichen. Nur die Steuer- und Auswerteeinrichtung 42 stellt eine Übereinstimmung zwischen der in dem Kommunikationstelegramm enthaltenen ersten Adresse und der dem sekundären Kommunikationsgerät 40 eindeutig zugeordneten Adresse fest. Demzufolge veranlasst lediglich die Steuer- und Auswerteeinrichtung 42 das sekundären Kommunikationsgeräts 40 unter Ansprechen auf den im Kommunikationstelegramm enthaltenen Befehl, ein Antworttelegramm, in welchem die aktuelle Temperatur und die eindeutige Adresse des sekundären Kommunikationsgeräts 40 gespeichert ist, zu erzeugen, und dieses Antworttelegramm über die elektrooptische Wandlereinrichtung 43 der Lichtwellenleiter-Anschlusseinrichtung 44 als Lichtsignal zuzuführen und über den Lichtwellenleiter 160 zum Ankopplungsmodul 30 zu übertragen.

Das Ankopplungsmodul 30 empfängt das optische Antworttelegramm an der Lichtwellenleiter-Anschlusseinrichtung 34, welches mittels der elektrooptischen Wandlereinrichtung 33 in ein entsprechendes elektrisches Antworttelegramm umgewandelt und über die Busschnittstelle 35 und den Datenbus 70 zum primären Kommunikationsgerät 20 übertragen wird. Die Steuereinheit 22 des primären Kommunikationsgerätes 20 ist dazu ausgebildet, unter Ausführung der im primären Kommunikationsgerät 20 gespeicherten Software, das ist vorzugsweise das zweite Programm, das empfangene Antworttelegramm beispielsweise zu verarbeiten und die darin enthaltenen aktuellen Temperaturwerte an das in der Speichereinrichtung 21 hinterlegte Anwendungsprogramm zur weiteren Verwendung zu übergeben.

Um den aktuellen Temperaturwert des sekundären Kommunikationsgeräts 60 abfragen zu können, wird beispielsweise in der zuvor beschriebenen Art und Weise vom primären Kommunikationsgerät 20 ein weiteres Kommunikationstelegramm erzeugt, in das die eindeutige Adresse des sekundären Kommunikationsgeräts 60 eingefügt wird. Das weitere Kommunikationstelegramm wird dann wiederum zweimal kopiert. Die kopierten Kommunikationstelegramme werden dann nacheinander über die Busschnittstelle 26 und den Bus 70 zu den Ankopplungsmodulen 30 und 50 übertragen. Am Ende des beispielhaften Kommunikationszyklus hat das primäre Kommunikationsgerät 20 die aktuellen Temperaturwerte der beiden sekundären Kommunikationsgeräte 40 und 60 der ersten Kommunikationsgruppe.

Nunmehr startet das primäre Kommunikationsgerät 20 die Kommunikation der zweiten Kommunikationsgrupp, um die aktuellen Temperaturwerte der beiden sekundären Kommunikationsgeräte 90 und 110 der zweiten Kommunikationsgruppe zu erhalten. Da diese Kommunikation der Kommunikation der ersten Kommunikationsgruppe im Wesentlichen entspricht, wird, um Wiederholungen zu vermeiden, auf die obige detaillierte Schilderung der Funktionsweise des Kommunikationssystems 10 bezüglich der ersten Kommunikationsgruppe verwiesen.

### 3. beispielhaftes Szenario

Nachfolgend wird ein drittes beispielhaftes Szenario beschrieben, nach dem auch die Busschnittstelle 25 vorhanden bzw. aktiviert ist. Angenommen sei nunmehr, dass das primäre Kommunikationsgerät 20, die Ankopplungsmodule 30, 50, 80 und 100 und die sekundären Kommunikationsgeräte 40, 60 90 und 110 eine erste Kommunikationsgruppe bilden, während das primäre Kommunikationsgerät 20, die an den zweiten Datenbus 71 angeschlossenen Ankopplungsmodule 120 und 140 und die sekundären Kommunikationsgeräte 130 und 150 eine zweite Kommunikationsgruppe bilden. Beispielsweise handelt es sich bei den beiden sekundären Kommunikationsgeräten 130 und 150 ebenfalls um Temperatursensoren.

Dementsprechend wird das primäre Kommunikationsgerät 20 bzw. das zweite Programm derart konfiguriert und parametriert, dass
a) die eindeutigen Adressen der Ankopplungsmodule 30, 50, 80 und 100 und die eindeutigen Adressen der sekundären Kommunikationsgeräte 40, 60, 90 und 110 der ersten Kommunikationsgruppe zugeordnet werden, wobei der Parameter n, der der Anzahl der Ankopplungsmodule der ersten Kommunikationsgruppe entspricht, auf vier eingestellt wird, und dass
b) die eindeutigen Adressen der Ankopplungsmodule 120 und 140 und die eindeutigen Adressen der sekundären Kommunikationsgeräte 130 und 150 der zweiten Kommunikationsgruppe zugeordnet werden, wobei der Parameter m, der der Anzahl der Ankopplungsmodule der zweiten Kommunikationsgruppe entspricht, auf 2 eingestellt wird.

Weiterhin wird das primäre Kommunikationsgerät 20 derart konfiguriert bzw. programmiert, dass alle Kommunikationstelegramme bzw. kopierten Kommunikationstelegramme, die die eindeutige Adresse des Ankopplungsmoduls 120 oder des Ankopplungsmoduls 140 enthalten, über die Busschnittstelle 25 und den Datenbus 71 übertragen werden, während alle Kommunikationstelegramme bzw. kopierten Kommunikationstelegramme, die die eindeutige Adresse der Ankopplungsmodule 30, 50, 80 oder 100 enthalten, über die Busschnittstelle 26 und den Datenbus 70 übertragen werden. Dies kann beispielsweise dadurch erreicht werden, dass den beiden Busschnittstellen 25, 26 jeweils eine eindeutige Kennung zugeordnet ist, die in die jeweiligen kopierten Kommunikationstelegramme beispielsweise vom zweiten Programm eingefügt wird.

Die Funktionsweise des Kommunikationssystems 10 hinsichtlich der ersten Kommunikationsgruppe entspricht im Wesentlichen der des ersten Szenarios mit dem Unterschied, dass das primäre Kommunikationsgerät 20 ferner dazu ausgebildet ist, alle kopierten Kommunikationstelegramme, die die eindeutige Adresse einer der Ankopplungsmodule 30, 50, 80 und 100 enthalten, über die Busschnittstelle 26 zu übertragen, und alle Antworttelegramme, die die eindeutige Adresse einer der sekundären Kommunikationsgeräte 40, 60, 90, 110 enthalten, der ersten Kommunikationsgruppe zuzuordnen. Um Wiederholungen zu vermeiden, wird deshalb auf die Schilderung des Szenarios 1 verwiesen. Im Ergebnis wird am Ende des Kommunikationszyklus das primäre Kommunikationsgerät 20 die aktuellen Temperaturwerte von den sekundären Kommunikationsgeräten 40, 60, 90 und 110 erhalten haben.

Die Funktionsweise des Kommunikationssystems 10 hinsichtlich der zweiten Kommunikationsgruppe entspricht im Wesentlichen der Funktionsweise, die im zweiten Szenario hinsichtlich der ersten oder zweiten Kommunikationsgruppe beschrieben worden ist, mit dem Unterschied, dass das primäre Kommunikationsgerät 20 ferner dazu ausgebildet ist, alle kopierten Kommunikationstelegramme, die die eindeutige Adresse einer der beiden Ankopplungsmodule 120 und 140 enthalten, über die Busschnittstelle 25 zu übertragen, und alle Antworttelegramme, die die eindeutige Adresse einer der beiden sekundären Kommunikationsgeräte 130 und 150 enthalten, der zweiten Kommunikationsgruppe zuzuordnen. Um Wiederholungen zu vermeiden, wird deshalb auf die Schilderung des Szenarios 2 verwiesen. Im Ergebnis wird am Ende des Kommunikationszyklus das primäre Kommunikationsgerät 20 die aktuellen Temperaturwerte von den sekundären Kommunikationsgeräten 130 und 150 erhalten haben.

Angemerkt sei noch, dass das zweite Programm, welches die Sternkoppler-Funktionalität implementiert, als Teil einer Firmware, die ebenfalls in der Speichereinrichtung 23 abgelegt werden kann, oder als separates Anwendungsprogramm, welches beispielsweise in der Speichereinrichtung 21 abgelegt werden kann, realisiert sein kann.

## Patentansprüche

1. Primäres Kommunikationsgerät (20) aufweisend:
eine Busschnittstelle (26), die zum Anschließen des primären Kommunikationsgeräts (20) an einen Datenbus (70) ausgebildet ist,
eine Speichereinrichtung (23), in der eine Software gespeichert ist, wobei die Software ein erstes Programm, das ein Kommunikationsprotokoll, welches einen Master/Slave-Betrieb unterstützt, implementiert, und ein zweites Programm, das eine Sternkoppler-Funktionalität implementiert, enthält, und
eine Steuereinheit (22), die dazu ausgebildet ist, unter Ausführung des ersten Programms das primäre Kommunikationsgerät (20) zu veranlassen,
- ein Kommunikationstelegramm für ein vorbestimmtes sekundäres Kommunikationsgerät (40, 60, 90, 110) bereitzustellen, wobei die Steuereinheit (22) ferner dazu ausgebildet ist, unter Ausführung des zweiten Programms das primäre Kommunikationsgerät (20) zu veranlassen
- in das Kommunikationstelegramm eine erste Adresse, die dem vorbestimmten sekundären Kommunikationsgerät (40, 60, 90, 110) zugeordnet ist, einzufügen,
- das Kommunikationstelegramm n-mal zu kopieren, wobei n größer als 1 ist,
- in jedes der kopierten Kommunikationstelegramme eine zweite Adresse einzufügen, wobei die zweiten Adressen unterschiedlich sind und jeweils einem separaten Ankopplungsmodul (30, 50, 80, 100) zugeordnet sind, und
- jedes der kopierten Kommunikationstelegramme über die Busschnittstelle (26) zu versenden,.

2. Primäres Kommunikationsgerät nach Anspruch 1, wobei
das erste Programm ein Kommunikationsprotokoll zur seriellen Datenübertragung implementiert, und wobei
die Busschnittstelle (26) als serielle Busschnittstelle ausgebildet ist.

3. Primäres Kommunikationsgerät nach einem der vorhergehenden Ansprüche, wobei das primäre Kommunikationsgerät (20) ein Steuergerät insbesondere zum Einsatz in der Fernwirk- oder Stationsleittechnik ist.

4. Primäres Kommunikationsgerät nach einem der vorhergehenden Ansprüche, ferner aufweisend:
eine weitere Busschnittstelle (25), die zum Anschließen des primären Kommunikationsgeräts (20) an einen weiteren Datenbus (25) ausgebildet ist, wobei die Steuereinheit (22) dazu ausgebildet ist, unter Ausführung der Software das primäre Kommunikationsgerät (20) zu veranlassen, jedes der kopierten Kommunikationstelegramme über die Busschnittstelle (26) oder die weitere Busschnittstelle (25) zu versenden.

5. Primäres Kommunikationsgerät nach einem der vorhergehenden Ansprüche, wobei
die Steuereinheit (22) dazu ausgebildet ist, unter Ausführung der Software das primäre Kommunikationsgerät (20) zu veranlassen, zumindest einige der kopierten Kommunikationstelegramme zu segmentieren und die Segmente jedes segmentierten Kommunikationstelegramms einzeln über die Busschnittstelle (25) zu versenden.

6. Ankopplungsmodul (30, 50, 80, 100) aufweisend:
eine Busschnittstelle (35, 55, 85, 105), die zum Anschließen des Ankopplungsmoduls (30, 50, 80, 100) an einen Datenbus (26) ausgebildet ist,
wobei dem Ankopplungsmodul (30, 50, 80, 100) eine eindeutige Adresse zugeordnet ist,
eine elektrooptische Wandlereinrichtung (30, 50, 80, 100) mit einer optischen Sende- und Empfangseinrichtung,
eine einzige Lichtwellenleiter-Anschlusseinrichtung (34, 54, 84, 104), die zum Anschließen eines einzigen sekundären Kommunikationsgeräts (40, 60, 90, 110) mittels wenigstens eines Lichtwellenleiters (160, 161, 162, 163) ausgebildet ist,
eine Speichereinrichtung (31, 51, 81, 101), in der eine Software gespeichert ist, und
eine Steuer- und Auswerteeinrichtung (32, 52, 82, 102), die dazu ausgebildet ist, unter Ausführung der Software das Ankopplungsmodul (30, 50, 80, 100) zu veranlassen, aus einem an der Busschnittstelle (35, 55, 85, 105) ankommenden Kommunikationstelegramm, welches eine erste Adresse, die einem sekundären Kommunikationsgerät (40, 60, 90, 110) zugordnet ist, und eine zweite Adresse, die einem Ankopplungsmodul (30, 50, 80, 100) zugeordnet ist, enthält, die zweite Adresse auszulesen und das Kommunikationstelegramm nur dann über die elektrooptische Wandlereinrichtung (33, 53, 83, 103) der einzigen Lichtwellenleiter-Anschlusseinrichtung (34, 54, 84, 104) zuzuführen, wenn die ausgelesene zweite Adresse mit der dem Ankopplungsmodul (30, 50, 80, 100) zugeordneten eindeutigen Adresse übereinstimmt.

7. Ankopplungsmodul nach Anspruch 6, wobei
die Steuer- und Auswerteeinrichtung (32, 52, 82, 102) dazu ausgebildet ist, unter Ausführung der Software das Ankopplungsmodul (30, 50, 80, 100) zu veranlassen, die zweite Adresse aus dem Kommunikationstelegramm zu entfernen.

8. Ankopplungsmodul nach Anspruch 6 oder 7, wobei
die Busschnittstelle (35, 55, 85, 105) als serielle Busschnittstelle ausgebildet ist.

9. Ankopplungsmodul nach einem der Ansprüche 6 bis 8, wobei
die Steuer- und Auswerteeinrichtung (32, 52, 82, 102) ferner dazu ausgebildet ist, unter Ausführung der Software das Ankopplungsmodul zu veranlassen, ein an der einzigen Lichtwellenleiter-Anschlusseinrichtung (34, 54, 84, 104) ankommendes Kommunikationstelegramm, welches eine Adresse, die einem sekundären Kommunikationsgerät (40, 60, 90, 110) eindeutig zugordnet ist, enthält, mittels der elektrooptischen Wandlereinrichtung (33, 53, 83, 103) über die Busschnittstelle (35, 55, 85, 105) zu versenden.

10. Ankopplungsmodul nach einem der Ansprüche 6 bis 9, wobei
die Steuer- und Auswerteeinrichtung (32, 52, 82, 102) dazu ausgebildet ist, unter Ausführung der Software das Ankopplungsmodul (30, 50, 80, 100) zu veranlassen, die an der Busschnittstelle (35, 55, 85, 105) ankommenden Segmente eines segmentierten Kommunikationstelegramms wieder zu dem ursprünglichen Kommunikationstelegramm zusammenzufügen.

11. Kommunikationssystem (10) aufweisend:
einen Datenbus (70),
ein primäres Kommunikationsgerät (20) nach einem der Ansprüche 1 bis 5, das an dem Datenbus (70) angeschlossen ist,
mehrere erste Ankopplungsmodule (30, 50) nach einem der Ansprüche 6 bis 10, die jeweils an dem Datenbus (70) angeschlossen sind, wobei jedem der ersten Ankopplungsmodule (30, 50) eine eindeutige Adresse zugeordnet ist, wobei
an die einzige Lichtwellenleiter-Anschlusseinrichtung (34, 54) jedes der Ankopplungsmodule (30, 50) ein einziges erstes sekundäres Kommunikationsgerät (40, 60) über wenigstens einen Lichtwellelenleiter ((160, 161) angeschlossen ist, wobei jedem der ersten sekundären Kommunikationsgeräte (40, 60) eine eindeutige Adresse zugeordnet ist, wobei n gleich der Anzahl der ersten Ankopplungsmodule (30, 50) ist, wobei jedes der ersten sekundären Kommunikationsgeräte (40, 60) eine Speichereinrichtung (41, 61), in der eine Software gespeichert ist, eine Lichtwellenleiter-Anschlusseinrichtung (44, 64), eine elektrooptische Wandlereinrichtung (43, 63) mit einer optischen Sende- und
Empfangseinrichtung und eine Steuer- und Auswerteeinrichtung (42, 62) aufweist, die dazu ausgebildet ist, unter Ausführung der Software das jeweilige erste sekundäre Kommunikationsgerät (40, 60) zu veranlassen,
- aus einem über die Lichtwellenleiter-Anschlusseinrichtung ((44, 64) empfangenen Kommunikationstelegramm, welches eine erste Adresse enthält, die erste Adresse auszulesen und auf Übereinstimmung mit der dem jeweiligen ersten sekundären Kommunikationsgerät(40, 60) zugeordneten eindeutigen Adresse zu prüfen, und
- bei Übereinstimmung in Abhängigkeit von dem empfangenen Kommunikationstelegramm ein Antworttelegramm zu erzeugen und dieses über die elektrooptischen Wandlereinrichtung (43, 63) zur Versendung der Lichtwellenleiter-Anschlusseinrichtung (44, 64) zuzuführen.

12. Kommunikationssystem nach Anspruch 11, wobei
der Datenbus (70) ein serieller Bus ist.

13. Kommunikationssystem nach Anspruch 11 oder 12, wobei das primäre Kommunikationsgerät (20) dazu ausgebildet ist, an seiner Busschnittstelle (26) ein Antworttelegramm von einem der ersten sekundären Kommunikationsgeräte (40, 60) zu empfangen, und wobei die Steuereinheit (22) des primären Kommunikationsgeräts (20) dazu ausgebildet ist, unter Ausführung der im primären Kommunikationsgerät (20 gespeicherten Software das empfangene Antworttelegramm auszuwerten und/oder weiterzuleiten.

14. Kommunikationssystem nach einem der Ansprüche 11 bis 13,
ferner aufweisend:
mehrere zweite Ankopplungsmodule (80, 100) nach einem der Ansprüche 6 bis 10, die jeweils an dem Datenbus (70) angeschlossen sind, wobei jedem der zweiten Ankopplungsmodule (80, 100) eine eindeutige Adresse zugeordnet ist, wobei
an die einzige Lichtwellenleiter-Anschlusseinrichtung (84, 104) jedes der zweiten Ankopplungsmodule (80, 100) ein zweites sekundäres Kommunikationsgerät (90, 110) über wenigstens einen Lichtwellelenleiter (162, 163) angeschlossen ist, wobei jedem der zweiten sekundären Kommunikationsgeräte (90, 110) eine eindeutige Adresse zugeordnet ist, wobei das primäre Kommunikationsgerät (20) und die ersten Ankopplungsmodule (30, 50) eine erste Kommunikationsgruppe und das primäre Kommunikationsgerät (20) und die zweiten Ankopplungsmodule (80, 100) eine zweite Kommunikationsgruppe bilden, wobei die Steuereinheit (22) des primären Kommunikationsgeräts (20) ferner dazu ausgebildet ist, unter Ausführung der Software das primäre Kommunikationsgerät (20) zu veranlassen,
- ein zweites Kommunikationstelegramm für ein vorbestimmtes zweites sekundäre Kommunikationsgerät (90, 110) bereitzustellen,
- in das zweite Kommunikationstelegramm eine erste Adresse, die dem vorbestimmten zweiten sekundären Kommunikationsgerät (90, 110) zugeordnet ist, einzufügen,
- das zweite Kommunikationstelegramm m-mal zu kopieren, wobei m größer als 1 und gleich der Anzahl der zweiten Ankopplungsmodule (80, 100) ist,
- in jedes der kopierten Kommunikationstelegramme eine zweite Adresse einzufügen, wobei die zweiten Adressen unterschiedlich sind und jeweils einem der zweiten Ankopplungsmodule (80, 100) zugeordnet sind, und
- jedes der kopierten Kommunikationstelegramme über die Busschnittstelle (26) zu versenden.

15. Kommunikationssystem nach einem der Ansprüche 11 bis 14 in Verbindung mit Anspruch 5, ferner aufweisend:
einen weiteren Datenbus (25), an dem das primäre Kommunikationsgerät (20) und mehrere dritte Ankopplungsmodule (120, 140) nach einem der Ansprüche 7 bis 11 angeschlossen sind, wobei jedem der dritten Ankopplungsmodule (120, 140) eine eindeutige Adresse zugeordnet ist, wobei
an die einzige Lichtwellenleiter-Anschlusseinrichtung jedes der dritten Ankopplungsmodule (120, 140) ein drittes sekundäres Kommunikationsgerät (130, 150) über wenigstens einen Lichtwellelenleiter (164, 165) angeschlossen ist, wobei jedem der dritten sekundären Kommunikationsgeräte (130, 150) eine eindeutige Adresse zugeordnet ist.

## Claims

1. A primary communication apparatus (20) comprising:
a bus interface (26) which is adapted to connect the primary communication apparatus (20) to a data bus (70),
a memory device (23) in which software is stored, wherein
the software comprises a first program that implements a communication protocol supporting a master/slave operation and a second program that implements a star coupler functionality, and
a control unit (22) which is adapted, when executing the first program, to cause the primary communication apparatus (20)
- to provide a communication telegram for a predetermined secondary communication apparatus (40, 60, 90, 110), wherein the control unit (22) is further adapted, when executing the second program, to cause the primary communication apparatus (20)
- to insert into the communication telegram a first address assigned to the predetermined secondary communication apparatus (40, 60, 90, 110),
- to copy the communication telegram n times, wherein n is greater than 1,
- to insert into each of the copied communication telegrams a second address, wherein the second addresses are all different and each is assigned to a separate coupling module (30, 50, 80, 100), and
- to transmit each of the copied communication telegrams via the bus interface (26).

2. The primary communication apparatus of claim 1, wherein
the first program implements a communication protocol for serial data transmission, and wherein
the bus interface (26) is provided as a serial bus interface.

3. The primary communication apparatus of any one of the preceding claims, wherein the primary communication apparatus (20) is a control apparatus, in particular for use in remote control or station control technology.

4. The primary communication apparatus of any one of the preceding claims, further comprising:
a further bus interface (25), which is adapted to connect the primary communication apparatus (20) to a further data bus (25),
wherein the control unit (22) is adapted, when executing the software, to cause the primary communication apparatus (20) to transmit each of the copied communication telegrams via the bus interface (26) or the further bus interface (25).

5. The primary communication apparatus of any one of the preceding claims, wherein
the control unit (22) is adapted, when executing the software, to cause the primary communication apparatus (20) to segment at least some of the copied communication telegrams and to transmit the segments of each segmented communication telegram individually via the bus interface (25).

6. A coupling module (30, 50, 80, 100) comprising:
a bus interface (35, 55, 85, 105) adapted to connect the coupling module (30, 50, 80, 100) to a data bus (26), wherein a unique address is assigned to the coupling module (30, 50, 80, 100),
an electro-optical converter device (30, 50, 80, 100) comprising an optical transmitting and receiving device,
a single optical waveguide connection device (34, 54, 84, 104) which is adapted to connect a single secondary communication apparatus (40, 60, 90, 110) by means of at least one optical waveguide (160, 161, 162, 163),
a memory device (31, 51, 81, 101) in which software is stored, and
a control and evaluation device (32, 52, 82, 102) which is adapted, when executing the software, to cause the coupling module (30, 50, 80, 100) to read out the second address from a communication telegram arriving at the bus interface (35, 55, 85, 105), wherein the communication telegram comprises a first address assigned to a secondary communication apparatus (40, 60, 90, 110) and a second address assigned to a coupling module (30, 50, 80, 100), and to supply the communication telegram via the electro-optical converter device (33, 53, 83, 103) to the single optical waveguide connection device (34, 54, 84, 104) only if the read-out second address matches the unique address assigned to the coupling module (30, 50, 80, 100).

7. The coupling module according to claim 6, wherein
the control and evaluation device (32, 52, 82, 102) is adapted, when executing the software, to cause the coupling module (30, 50, 80, 100) to remove the second address from the communication telegram.

8. The coupling module according to claim 6 or 7, wherein
the bus interface (35, 55, 85, 105) is provided as a serial bus interface.

9. The coupling module according to any one of claims 6 to 8, wherein
the control and evaluation device (32, 52, 82, 102) is further adapted, when executing the software, to cause the coupling module to transmit a communication telegram arriving at the single optical waveguide connection device (34, 54, 84, 104), which comprises an address uniquely assigned to a secondary communication apparatus (40, 60, 90, 110), by means of the electro-optical converter device (33, 53, 83, 103) via the bus interface (35, 55, 85, 105).

10. The coupling module according to any one of claims 6 to 9, wherein
the control and evaluation device (32, 52, 82, 102) is adapted, when executing the software, to cause the coupling module (30, 50, 80, 100) to reassemble the segments of a segmented communication telegram arriving at the bus interface (35, 55, 85, 105) into the original communication telegram.

11. A communication system (10) comprising:
a data bus (70),
a primary communication apparatus (20) according to any one of claims 1 to 5 connected to the data bus,
a plurality of first coupling modules (30, 50) according to any one of claims 6 to 10 each connected to the data bus (70), wherein each of the first coupling modules (30, 50) is assigned a unique address, wherein
a first secondary communication apparatus (40, 60) is connected to the single optical waveguide connection device (34, 54) of each of the coupling modules (30, 50) via at least one optical waveguide (160, 161), wherein each of the first secondary communication apparatuses (40, 60, 90, 110) is assigned a unique address, wherein n is equal to the number of the first coupling modules (30, 50), wherein
each of the first secondary communication apparatuses (40, 60) comprises a memory device (41, 61), in which software is stored, an optical waveguide connection device (44, 64), an electro-optical converter device (43, 63) having an optical transmitting and receiving device, and a control and evaluation device (42, 62) which is adapted, when executing the software, to cause the respective first secondary communication apparatus (40, 60)
- to read out the first address from a communication telegram received via the optical waveguide connection device (44, 64), which comprises a first address, and to check it for correspondence with the unique address assigned to the respective first secondary communication apparatus (40, 60), and
- in case of correspondence, to generate a response telegram in dependence of the received communication telegram and to supply this via the electro-optical converter device (43, 63) to the optical waveguide connection device (44, 64) for transmission.

12. The communication system according to claim 11, wherein
the data bus (70) is a serial bus.

13. The communication system according to claim 11 or 12, wherein
the primary communication apparatus (20) is adapted to receive, at its bus interface (26), a response telegram from one of the first secondary communication apparatuses (40, 60), and wherein
the control unit (22) of the primary communication apparatus (20) is adapted, when executing the software stored in the primary communication apparatus (20), to evaluate and/or forward the received response telegram.

14. The communication system of any one of claims 11 to 13,
further comprising:
a plurality of second coupling modules (80, 100) according to any one of claims 7 to 11, each connected to the data bus (70), wherein each of the second coupling modules (80, 100) is assigned a unique address, wherein
a second secondary communication apparatus (90, 110) is connected to the single optical waveguide connection device (84, 104) of each of the second coupling modules (80, 100) via at least one optical waveguide (162, 163), wherein each of the second secondary communication apparatuses (90, 110) is assigned a unique address,
wherein the primary communication apparatus (20) and the first coupling modules (30, 50) form a first communication group and the primary communication apparatus (20) and the second coupling modules (80, 100) form a second communication group, wherein the control unit (22) of the primary communication apparatus (20) is further adapted, when executing the software, to cause the primary communication apparatus (20)
- to provide a second communication telegram for a predetermined second secondary communication apparatus (90, 110),
- to insert into the second communication telegram a first address assigned to the predetermined second secondary communication apparatus (90, 110),
- to copy the second communication telegram m times, wherein m is greater than 1 and equal to the number of second coupling modules (80, 100),
- to insert into each of the copied communication telegrams a second address, wherein the second addresses are all different and each is assigned to one of the second coupling modules (80, 100), and
- to transmit each of the copied communication telegrams via the bus interface (26).

15. The communication system according to any one of claims 11 to 14 in conjunction with claim 5, further comprising:
a further data bus (25) to which the primary communication apparatus (20) and a plurality of third coupling modules (120, 140) according to any one of claims 7 to 11 are connected, wherein each of the third coupling modules (120, 140) is assigned a unique address, wherein
a third secondary communication apparatus (130, 150) is connected to the single optical waveguide connection device of each of the third coupling modules (120, 140) via at least one optical waveguide (164, 165), wherein a unique address is assigned to each of the third secondary communication apparatuses (130, 150).

## Revendications

1. Appareil de communication (20) primaire comprenant :
une interface de bus (26) conçue pour connecter l'appareil de communication (20) primaire à un bus de données (70), une mémoire (23) dans laquelle est mémorisé le logiciel, le logiciel comprenant un premier programme, qui implémente un protocole de communication, lequel prend en charge le mode maître/esclave et un second programme, qui implémente une fonctionnalité de coupleur en étoile, et une unité de commande (22), qui est configurée pour amener l'appareil de communication (20) primaire, en exécutant le premier programme,
- à fournir un télégramme de communication pour un appareil de communication (40, 60, 90, 110) secondaire prédéterminé, dans lequel l'unité de commande (22) est en outre configurée pour amener l'appareil de communication (20) primaire, en exécutant le second programme,
- à insérer dans le télégramme de communication une première adresse qui est attribuée à l'appareil de communication (40, 60, 90, 110) secondaire prédéterminé,
- à copier le télégramme de communication n fois, n étant supérieur à 1,
- à insérer dans chacun des télégrammes de communication copiés une seconde adresse, les secondes adresses étant différentes et étant respectivement attribuées à un module de couplage (30, 50, 80, 100) séparé, et
- à envoyer chacun des télégrammes de communication copiés par l'intermédiaire de l'interface de bus (26).

2. Appareil de communication primaire selon la revendication 1, dans lequel
le premier programme implémente un protocole de communication pour la transmission de données en série, et dans lequel
l'interface de bus (26) est conçue sous la forme d'une interface de bus sériel.

3. Appareil de communication primaire selon l'une quelconque des revendications précédentes, dans lequel l'appareil de communication (20) primaire est un appareil de commande, en particulier destiné à être utilisé dans la technique de télécommande ou de pilotage de stations.

4. Appareil de communication primaire selon l'une quelconque des revendications précédentes, comprenant en outre :
une interface de bus (25) supplémentaire, qui est configurée pour connecter l'appareil de communication (20) primaire à un bus de données (25) supplémentaire, dans lequel l'unité de commande (22) est configurée pour amener l'appareil de communication (20) primaire, en exécutant le logiciel, à envoyer chacun des télégrammes de communication copiés par l'intermédiaire de l'interface de bus (26) ou de l'interface de bus (25) supplémentaire.

5. Appareil de communication primaire selon l'une quelconque des revendications précédentes, dans lequel
l'unité de commande (22) est configurée pour amener l'appareil de communication (20) primaire, en exécutant le logiciel, à segmenter au moins une partie des télégrammes de communication copiés et à envoyer individuellement les segments de chaque télégramme de communication segmenté par l'intermédiaire de l'interface de bus (25).

6. Module de couplage (30, 50, 80, 100) comprenant :
une interface de bus (35, 55, 85, 105), qui est conçue pour connecter le module de couplage (30, 50, 80, 100) à un bus de données (26), le module de couplage (30, 50, 80, 100) se voyant attribuer une adresse unique,
un dispositif convertisseur (30, 50, 80, 100) électro-optique comportant un dispositif de transmission et de réception optique,
un dispositif de connexion à fibre optique (34, 54, 84, 104) unique conçu pour connecter un appareil de communication (40, 60, 90, 110) secondaire unique au moyen d'au moins une fibre optique (160, 161, 162, 163),
une mémoire (31, 51, 81, 101), dans laquelle est mémorisé un logiciel, et
un dispositif de commande et d'évaluation (32, 52, 82, 102), qui est configuré, en exécutant le logiciel, pour amener le module de couplage (30, 50, 80, 100) à lire, à partir d'un télégramme de communication arrivant à l'interface de bus (35, 55, 85, 105), lequel comprend une première adresse, qui est attribuée à un appareil de communication (40, 60, 90, 110) secondaire et une seconde adresse attribuée à un module de couplage (30, 50, 80, 100), la seconde adresse et à acheminer le télégramme de communication par l'intermédiaire du dispositif de conversion (33, 53, 83, 103) électro-optique au dispositif de connexion à fibre optique (34, 54, 84, 104) unique uniquement lorsque la seconde adresse lue correspond à l'adresse unique attribuée au module de couplage (30, 50, 80, 100).

7. Module de couplage selon la revendication 6, dans lequel
le dispositif de commande et d'évaluation (32, 52, 82, 102) est configuré pour amener le module de couplage (30, 50, 80, 100), en exécutant le logiciel, à supprimer la seconde adresse du télégramme de communication.

8. Module de couplage selon la revendication 6 ou 7, dans lequel l'interface de bus (35, 55, 85, 105) est conçue sous la forme d'une interface de bus sériel.

9. Module de couplage selon l'une quelconque des revendications 6 à 8, dans lequel
le dispositif de commande et d'évaluation (32, 52, 82, 102) est en outre configuré pour amener le module de couplage, en exécutant le logiciel, à envoyer un télégramme de communication arrivant au dispositif de connexion à fibre optique (34, 54, 84, 104) unique, lequel comprend une adresse attribuée de manière unique à un appareil de communication (40, 60, 90, 110) secondaire, au moyen du dispositif de conversion (33, 53, 83, 103) électro-optique par l'intermédiaire de l'interface de bus (35, 55, 85, 105).

10. Module de couplage selon l'une quelconque des revendications 6 à 9, dans lequel
le dispositif de commande et d'évaluation (32, 52, 82, 102) est configuré pour amener le module de couplage (30, 50, 80, 100), en exécutant le logiciel, à rassembler les segments d'un télégramme de communication segmenté arrivant à l'interface de bus (35, 55, 85, 105) dans le télégramme de communication d'origine.

11. Système de communication (10) comprenant :
un bus de données (70),
un appareil de communication (20) primaire selon l'une quelconque des revendications 1 à 5, qui est connecté au bus de données (70),
plusieurs premiers modules de couplage (30, 50) selon l'une quelconque des revendications 6 à 10, qui sont respectivement connectés au bus de données (70), chacun des premiers modules de couplage (30, 50) se voyant attribuer une adresse unique, dans lequel
un premier appareil de communication (40, 60) secondaire unique est connecté par l'intermédiaire d'au moins une fibre optique (160, 161) à chaque dispositif de connexion à fibre optique (34, 54) unique de chaque module de couplage (30, 50), dans lequel chacun des premiers appareils de communication (40, 60) secondaires se voit attribuer une adresse unique, n étant égal au nombre de premiers modules de couplage (30, 50), chacun des premiers appareils de communication (40, 60) secondaires comprenant une mémoire (41, 61), dans laquelle est mémorisé un logiciel, un dispositif de connexion à fibre optique (44, 64), un dispositif convertisseur (43, 63) électro-optique comportant un dispositif de transmission et de réception optique, et un dispositif de commande et d'évaluation (42, 62), qui est configuré pour amener le premier appareil de communication (40, 60) secondaire respectif, en exécutant le logiciel,
- à lire la première adresse d'un télégramme de communication reçu par l'intermédiaire du dispositif de connexion à fibre optique (44, 64), lequel comprend une première adresse et à vérifier sa correspondance avec l'adresse unique attribuée au premier appareil de communication (40, 60) secondaire respectif, et
- à générer, en cas de correspondance, en fonction du télégramme de communication reçu, un télégramme de réponse et à l'acheminer par l'intermédiaire du dispositif convertisseur (43, 63) électro-optique au dispositif de connexion à fibre optique (44, 64).

12. Système de communication selon la revendication 11, dans lequel
le bus de données (70) est un bus sériel.

13. Système de communication selon la revendication 11 ou 12, dans lequel
l'appareil de communication (20) primaire est configuré pour recevoir un télégramme de réponse sur son interface de bus (26) provenant de l'un des premiers appareils de communication (40, 60) secondaires, et dans lequel
l'unité de commande (22) de l'appareil de communication (20) primaire est configurée pour évaluer et/ou transmettre le télégramme de réponse reçu en exécutant le logiciel mémorisé dans l'appareil de communication (20) primaire.

14. Système de communication selon l'une quelconque des revendications 11 à 13, comprenant en outre :
plusieurs deuxièmes modules de couplage (80, 100) selon l'une quelconque des revendications 6 à 10, qui sont respectivement connectés au bus de données (70), chacun des deuxièmes modules de couplage (80, 100) se voyant attribuer une adresse unique, dans lequel
un deuxième appareil de communication (90, 110) secondaire est connecté au dispositif de connexion à fibre optique (84, 104) unique de chacun des deuxièmes modules de couplage (80, 100) par l'intermédiaire d'au moins une fibre optique (162, 163), chaque deuxième appareil de communication (90, 110) secondaire se voyant attribuer une adresse unique, dans lequel l'appareil de communication (20) primaire et les premiers modules de couplage (30, 50) forment un premier groupe de communication et l'appareil de communication (20) primaire et les deuxièmes modules de couplage (80, 100) forment un second groupe de communication, dans lequel l'unité de commande (22) de l'appareil de communication (20) primaire est configurée pour amener l'appareil de communication (20), en exécutant le logiciel,
- à fournir un second télégramme de communication à un deuxième appareil de communication (90, 110) secondaire prédéterminé,
- à insérer au second télégramme de communication une première adresse, qui est attribuée au deuxième appareil de communication (90, 110) secondaire prédéterminé,
- à copier le second télégramme de communication m fois, m étant supérieur à 1 et égal au nombre des deuxièmes modules de couplage (80, 100),
- à insérer une seconde adresse à chacun des télégrammes de communication copiés, dans lequel les secondes adresses sont différentes et sont respectivement attribuées à l'un des deuxièmes modules de couplage (80, 100), et
- à envoyer chacun des télégrammes de communication copiés par l'intermédiaire de l'interface de bus (26).

15. Système de communication selon l'une quelconque des revendications 11 à 14 en combinaison avec la revendication 5, comprenant en outre :
un bus de données (25) supplémentaire auquel sont connectés l'appareil de communication (20) primaire et plusieurs troisièmes modules de couplage (120, 140) selon l'une quelconque des revendications 7 à 11, dans lequel chacun des troisièmes modules de couplage (120, 140) se voit attribuer une adresse unique, dans lequel
un troisième appareil de communication (130, 150) secondaire est connecté au dispositif de connexion à fibre optique unique de chacun des troisièmes modules de couplage (120, 140) par l'intermédiaire de l'au moins une fibre optique (164, 165), dans lequel chacun des troisièmes appareils de communication (130, 150) secondaires se voit attribuer une adresse unique.
